(19) Europäisches Patentamt
European Patent Office
Office européen des brevets

(11) Veröffentlichungsnummer: **0 546 417 A1**

(12) # EUROPÄISCHE PATENTANMELDUNG

(21) Anmeldenummer: **92120433.5**

(22) Anmeldetag: **30.11.92**

(30) Priorität: **13.12.91 DE 4141190**

(43) Veröffentlichungstag der Anmeldung:
**16.06.93 Patentblatt 93/24**

(84) Benannte Vertragsstaaten:
**AT BE CH DE ES FR GB IT LI NL SE**

(51) Int. Cl.[5]: **C09D 7/00**, C09D 5/34

(71) Anmelder: **BAYER AG**

**W-5090 Leverkusen 1 Bayerwerk(DE)**

(72) Erfinder: **Höhlein, Peter, Dr.**
**Windmühlenweg 3e**
**W-4152 Kempen 3(DE)**
Erfinder: **Meixner, Jürgen, Dr.**
**Josef-Brocker-Dyck 56**
**W-4150 Krefeld(DE)**
Erfinder: **Pedain, Josef, Dr.**
**Haferkamp 6**
**W-5000 Köln 80(DE)**

(54) **Verwendung von Octadienylethern als Reaktivverdünner.**

(57) Die Verwendung von gegebenenfalls Estergruppen aufweisenden Octadienylethern einer Viskosität bei 23 °C von max. 5 000 mPa.s mit einem Gehalt an Octadienylgruppen $-C_8H_{13}$ von 1 bis 80 Gew.-%, an Hydroxylgruppen von 0 bis 35 Gew.-% und an Carboxylgruppen von 0 bis 30 Gew.-% als Reaktivverdünner für Überzugsmittel, sowie Spachtel- und Abdichtmassen.

EP 0 546 417 A1

Die Erfindung betrifft die Verwendung von niedrigviskosen, gegebenenfalls Ester-, Carboxyl- und/oder Hydroxylgruppen aufweisenden Octadienylethern als Reaktivverdünner für Überzugsmittel, sowie Spachtel- und Abdichtmassen.

Aus umwelthygienischen Gründen ist man bestrebt, den Gehalt von Überzugsmitteln an den üblichen Lacklösungsmitteln so gering wie möglich zu halten bzw. auf die Mitverwendung von inerten Lösungsmitteln völlig zu verzichten.

Eine Möglichkeit, sich diesem Ziel zu nähern, besteht in der Verwendung von Reaktivverdünnern, d.h. von niedrigviskosen Flüssigkeiten, die aufgrund ihrer niedrigen Viskosität die Einstellung von Verarbeitungsviskositäten unter Minimierung der Menge an inerten Lösungsmitteln erlauben und andererseits aufgrund von Reaktivzentren an der Vernetzungsreaktion teilhaben, somit in die feste Lackschicht eingebaut werden und nicht in die Umwelt entweichen.

Es wurde jetzt gefunden, daß niedrigviskose, gegebenenfalls Ester-, Carboxyl- und/oder Hydroxylgruppen aufweisende Octadienylether der nachstehend näher beschriebenen Art vielseitig verwendbare Reaktivverdünner darstellen, wobei diese Vielseitigkeit auf das Vorliegen von unterschiedlichen Reaktivgruppen zurückzuführen ist, die je nach eingesetztem Bindemittel bei der chemischen Aushärtung entweder eine Reaktion mit dem Bindemittel oder einer der Bindemittelkomponenten oder eine parallel zur Aushärtung des Hauptbindemittels ablaufende Polymerisationsreaktion ermöglichen, so daß jeweils homogene, im wesentlichen chemisch vernetzte Systeme oder Polymerabmischungen darstellende Lackfilme resultieren.

Gegenstand der Erfindung ist die Verwendung von gegebenenfalls Estergruppen aufweisenden Octadienylethern einer Viskositat bei 23 °C von max. 5 000 mPa•s mit einem Gehalt an Octadienylgruppen $-C_8H_{13}$ von 1 bis 80 Gew.-%, an Hydroxylgruppen von 0 bis 35 Gew.-% und an Carboxylgruppen von 0 bis 30 Gew.-% als Reaktivverdünner für Überzugsmittel, sowie Spachtel- und Abdichtmassen, wobei vorzugsweise die Verwendung der Fettsäureester von Octadienylethern von Polyolen, von deren Hydroxylgruppen mindestens eine mit einer Octadienylgruppe verestert ist und deren restliche freie Hydroxylgruppen mit ungesättigten Fettsäuren mit 6 bis 22 C-Atomen verethert sind, als Reaktivverdünner in oxidativ trocknenden Lacken ausgenommen ist.

Die Bindemittel, denen die erfindungswesentlichen Octadienylether zugemischt werden, stellen entweder durch Polymerisation, Polykondensation oder Polyaddition selbstvernetzende Einkomponenten-Bindemittel oder durch Polymerisation, Polykondensation oder Polyaddition vernetzbare Mehrkomponentenvorzugsweise Zweikomponenten-Systeme dar. In Betracht kommen insbesondere

- gegebenenfalls urethanmodifizierte, radikalisch aushärtbare, olefinisch ungesättigte Polyesterharze, die als Bindemittel für Überzugsmittel, Spachtel- und Abdichtmassen geeignet sind,
- oxidativ trocknende Bindemittel, insbesondere Alkydharze, die insbesondere zur Herstellung von Lacken eingesetzt werden,
- Zweikomponenten-Polyurethan-Bindemittel auf Basis von Hydroxylgruppen aufweisenden Polyester- und/oder Polyacrylatharzen in Kombination mit den üblichen Lackpolyisocyanaten, die insbesondere zur Herstellung von hochwertigen Zweikomponenten-Polyurethanlacken Verwendung finden,
- die bekannten, insbesondere aminisch aushärtbaren Epoxidharze, die ebenfalls sowohl zur Herstellung von Überzugsmitteln als auch zur Herstellung von Spachtel- und Abdichtmassen geeignet sind,
- Aminoplast- und Phenoplastharze, die entweder als selbstvernetzende Lackbindemittel oder als Härter für andere filmbildende, insbesondere Hydroxyl- oder Carboxylgruppen aufweisende Bindemittelkomponenten in Lacken für die unterschiedlichsten Einsatzgebiete eingesetzt werden können oder
- Silikonharze, die durch Polykondensation zu hochwertigen Lackfilmen ausgehärtet werden können.

Die erfindungsgemäß zu verwendenden Octadienylether eignen sich grundsätzlich als Reaktivverdünner für beliebige, chemisch aushärtbare Bindemittel bzw. Bindemittelkombinationen, wie sie beispielsweise von H.G. Elias in Makromoleküle, 3. Auflage (1975), S. 715 ff., Hüthig und Wepf-Verlag, Basel, Heidelberg; in Houben-Weyl, Methoden der organischen Chemie, Makromolekulare Stoffe, Teilbände 2 und 3, S. 689 - 2237 (1987), 4. Auflage, Georg Thieme Verlag Stuttgart, New York; oder von H. Wagner und H.F. Sarx in Lackkunstharze, Carl Hanser Verlag München (1971), 5. Auflage, beschrieben sind.

Bei den erfindungswesentlichen Octadienylethern handelt es sich um gegebenenfalls Estergruppen aufweisende flüssige Substanzen, die bei 23 °C eine Viskosität von 15 bis 5000, vorzugsweise von 20 bis 2 000 mPa•s, einen Gehalt an über Ethergruppen eingebauten Octadienylgruppen der Summenformel $-C_8H_{13}$ von 1 bis 80, vorzugsweise 5 bis 78 Gew.-%, einen Gehalt an alkoholischen Hydroxylgruppen von 0 bis 35, vorzugsweise 0 bis 28 Gew.-% und einen Gehalt an Carboxylgruppen von 0 bis 30, vorzugsweise 0 bis 20 Gew.-% aufweisen.

Bei den erfindungswesentlichen Octädienylgruppen der Summenformel $-C_8H_{13}$ handelt es sich vorzugsweise um Struktureinheiten der Formel

$-CH_2-CH=CH-CH_2-CH_2-CH_2-CH=CH_2$.

Die erfindungsgemäß zu verwendenden Octadienylether stellen Telomerisationsprodukte von Butadien mit mehrwertigen Alkoholen oder Veresterungsprodukte derartiger Telomerisate dar.

Die Telomerisation von Butadien mit mehrwertigen Alkoholen ist an sich bekannt und beispielsweise in DE-OS 2 148 156, DE-OS 2 011 163, GB-PS 2 114 974, J. Chem. Soc. D. (4), 193-4 (1971) oder Izv. Nauk SSSR, Sev. Khim. (1981) (8), S. 1837-1942 beschrieben.

Als Startmoleküle für die Telomerisation kommen mehrwertige Alkohole des Molekulargewichtsbereichs 62 bis 400, vorzugsweise 62 bis 160, insbesondere 62 bis 150, in Betracht. Beispielhaft genannt seien Ethylenglykol, Propylenglykol, Glycerin, Trimethylolpropan, Pentaerythrit, Di-Pentaerythrit, Mannit, Sorbit, Saccharose oder Gemische derartiger Alkohole. Die Telomerisation wird vorzugsweise in Gegenwart von Palladiumkatalysatoren, wie beispielsweise Palladium-Phosphinkomplexen und oftmals in Gegenwart von Lösungsmitteln, wie beispielsweise Isopropanol durchgeführt. Dabei kann der Telomerisierungsgrad durch eine geeignete Wahl der Mengenverhältnisse der Reaktionspartner gesteuert werden.

Die bevorzugten, auf diese Weise erhaltenen Telomerisate weisen im allgemeinen in statistischen Mitteln pro Molekül mindestens eine Octadienylgruppe auf. Erfindungsgemäß als Reaktivverdünner einsetzbar sind beliebige derartige Octadienylether, soweit sie den obengenannten Kriterien entsprechen.

Erfindungsgemäß besonders gut geeignete Reaktivverdünner erhält man jedoch, wenn man auf diese Weise erhaltene Octadienylethergruppen aufweisende Alkohole mit Mono- oder Polycarbonsäuren bzw. mit Polycarbonsäureanhydriden im Sinne einer Esterbildungsreaktion umsetzt. Für diese Umsetzungen eignen sich besonders Telomerisate, die als Ausgangsbasis auf mindestens dreiwertigen Alkoholen oder im statistischen Mittel mindestens trifunktionellen Alkoholgemischen beruhen, und die im Mittel pro Molekül mindestens eine freie Hydroxylgruppe aufweisen. Für die Veresterungsreaktion besonders gut geeignet sind die Telomerisationsprodukte von Glycerin und Butadien mit einem Hydroxylgruppengehalt von 5,5 bis 17 Gew.-% und/oder die Telomerisationsprodukte von Trimethylolpropan und Butadien mit einem Hydroxylgruppengehalt von 4,9 bis 14,0 Gew.-%.

Für die Veresterungsreaktion geeignete Carbonsäuren sind beispielsweise gesättigte und/oder olefinisch ungesättigte aliphatische Monocarbonsäuren mit 2 bis 22, vorzugsweise 6 bis 20 Kohlenstoffatomen, gesättigte und/oder olefinisch ungesättigte cycloaliphatische Monocarbonsäuren mit 6 bis 15, vorzugsweise 7 bis 10 Kohlenstoffatomen, aromatische Monocarbonsäuren mit 7 bis 15, vorzugsweise mit 7 bis 11 Kohlenstoffatomen, gesättigte und/oder olefinisch ungesättigte aliphatische Polycarbonsäuren mit 4 bis 12, vorzugsweise 4 bis 8 Kohlenstoffatomen, gesättigte und/oder olefinisch ungesättigte cycloaliphatische Polycarbonsäuren mit 6 bis 15, vorzugsweise 8 Kohlenstoffatomen, die diesen cycloaliphatischen Polycarbonsäuren entsprechenden aromatischen Polycarbonsäuren und/oder die Anhydride der zur intramolekularen Anhydridbildung befähigten Polycarbonsäuren der beispielhaft genannten Art.

Beispielhaft genannt seien Monocarbonsäuren wie Essigsäure, Propionsäure, Buttersäure, Valeriansäure, Capronsäure, Caprylsäure, Perlargonsäure, Caprinsäure, Laurinsäure, Myristinsäure, Palmitinsäure, Stearinsäure, Arachinsäure, Eikosancarbonsäure, Behensäure, Acrylsäure, Crotonsäure, Lauroleinsäue, Myristoleinsäure, Palmitoleinsäure, Ölsäure, Gadoleinsäure, Erucasäure, Rizinolsäure, Linolsäure, Arachidonsäure, Clupenodonsäure, Benzoesäure, Hexahydrobenzoesäure, Tetrahydrobenzoesäure, Abietinsäure, Zimtsäure, 1-Napthylsäure; oder Polycarbonsäuren wie Maleinsäure, Maleinsäureanhydrid, Fumarsäure, Bernsteinsäure, Oxalsäure, Adipinsäure, Phthalsäure, Phthalsäureanhydrid, Isophthalsäure, Terephthalsäure, Tetrahydrophthalsäure, Tetrahydrophthalsäureanhydrid, Hexahydrophthalsäure, Hexahydrophthalsäureanhydrid , 1,4-Cyclohexandicarbonsäure, Glutarsäure, Pimelinsäure, Korksäure, Azelainsäure, Sebacinsäure, Nonandicarbonsäure, Decandicarbonsäure, Undecandicarbonsäure, Norbomendicarbonsäure, Äpfelsäure, Weinsäure, Trimellithsäure, Trimellithsäureanhydrid, Pyromellithsäure, Pyromellithsäureanhydrid und/oder deren Gemische.

Besonders geeignet sind die aus natürlichen Quellen stammenden Fettsäuren bzw. Fettsäuregemische, die auch in technisch aufbereiteter und modifizierter Form eingesetzt werden können. Hierzu zählen beispielhaft Rizinußölfettsäure, Kokosnußölfettsäure, Baumwollsaatölfettsäure, Rapsölfettsäure, Sojabohnenölfettsäure, Tallölfettsäure, Talgfettsäure, Heringölfettsäure oder Walölfettsäure, die als natürliche und/oder synthetische Gemische bzw. als Umesterungsprodukte mit Polyolen einsetzbar sind.

Die Veresterungsreaktion kann nach bekannten Methoden, z.B. durch Schmelz- oder Azeotropveresterung der Alkohole und Säuren oder deren veresterungsfähigen Derivaten erfolgen, vgl. "Methoden der organischen Chemie" (Houben-Weyl), 4. Aufl. Bd. 14/2, Georg Thieme Verlag Stuttgart 1962, S. 1 - 5, 21 - 33, 40 - 44.

Vorzugsweise erfolgt die Veresterung unter Inertgasatmosphäre bei Temperaturen von 140-220 °C.

Bei der Verwendung von Polycarbonsäuren oder von Polycarbonsäureanhydriden resultieren bei der Veresterungsreaktion oftmals Estergruppen aufweisende Octadienylether mit einem Carboxylgruppengehalt innerhalb der oben angegebenen Grenzen. Im allgemeinen werden bei der Durchführung der Veresterungsreaktion die Octadienylethergruppen aufweisenden Alkohole und die Carbonsäuren bzw. Carbonsäureanhydride in solchen Mengen eingesetzt, daß auf jedes Mol an Carboxylgruppen bzw. auf ein halbes Mol an Carbonsäureanhydridgruppen 1 bis 9, vorzugsweise 1 bis 5 Mol an alkoholischen Hydroxylgruppen entfallen.

Um die erfindungsgemäß zu verwendenden, gegebenenfalls Estergruppen aufweisenden Octadienylether vor unerwünschten vorzeitiger Vernetzung zu bewahren, empfiehlt es sich, den erfindungswesentlichen Hilfsmitteln bereits bei ihrer Herstellung, insbesondere im Falle der Herstellung von Estergruppen aufweisenden Octadienylethern bei der Veresterungsreaktion 0,001 - 0,1 Gew.-% an Polymerisationsinhibitoren oder Antioxidantien zuzusetzen. Geeignete Stabitisatoren sind in "Methoden der organischen Chemie" (Houben-Weyl), 4. Aufl. Bd. 14/1, S. 443 ff. Georg Thieme Verlag, Stuttgart 1961, beschrieben. Sehr gut geeignet ist z.B. p-Benzochinon in einer Konzentration von 0,01 - 0,05 Gew.-%, bezogen auf erfindungsgemäß zu verwendende Octadienylether.

Die erfindungsgemäß zu verwendenden Octadienylether stellen als Reaktivverdünner einen Bestandteil der jeweils zum Einsatz gelangenden Bindemittel dar. Sie werden im allgemeinen in Mengen von 1 bis <100, vorzugsweise 5 bis 80 Gew.-%, bezogen auf das Gesamtgewicht aller Bindemittelkomponenten, inklusive den Reaktivverdünnern, eingesetzt.

Die erfindungsgemäß zu verwendenden Octadienylether eignen sich insbesondere als Reaktivverdünner für radikalisch aushärtbare Bindemittel. Hierzu gehören vor allem, gegebenenfalls urethanmodifizierte, ungesättigte Polyesterharze inklusive lufttrocknende Alkydharze und/oder ungesättigte Acrylatharze, die im allgemeinen unter Zusatz geeigneter Fotoinitiatoren unter Einwirkung energiereicher Strahlung (UV-Licht, Elektronenstrahlen) bzw. unter der Einwirkung von Luftsauerstoff unter Mitverwendung von Sikkativen (Alkydharze) ausgehärtet werden.

Aufbauprinzip, Herstellverfahren und Anwendungen der ungesättigten Polyester und ungesättigten Acrylatharze sind in H. Wagner, H.F. Sarx "Lackkunstharze", 5. Auflage, Carl Hanser Verlag, München (1971), S. 129 ff., in Houben-Weyl "Methoden der organischen Chemie", Band 4, Georg Thieme Verlag Stuttgart New York (1987), Band 2, Makromolekulare Stoffe, S. 1405 ff., in Ullmanns Enzyklopädie der technischen Chemie, Band 11 (1960), S. 345 ff. und Band 14 (1963), S. 87 ff., ferner von S.E. Young in Progress in Organic Coatings, 4 (1976), S. 225 ff., von H.-J. Rosenkranz in Farbe und Lack 18, (1975), S. 608 ff., von W. Brushwell in Farbe und Lack 91, Heft 9 (1985), S. 812 ff., von C.B. Rybuy et al in Journal of Paint Technology 46 Nr. 596 (1974), S. 60 ff. und von K.J. O'Hara in "A Review of the Chemistry and Formulation of Todays Radiation Curable Coatings and Inks" beta-gamma 1/91, S. 13 ff., gehalten auf dem "Rad Tech. Europe Radiation Curing Seminar" in Barcelona (1990), ausführlich beschrieben.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in Houben-Weyl, "Methoden der organischen Chemie", Band E 20, Seite 80 ff., Georg Thieme Verlag Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-1-propan-1-on.

Die erwähnten Fotoinitiatoren, die je nach Verwendungszweck der erfindungsgemäßen Produkte in Mengen zwischen 0,1 bis 10 Gew.-%, vorzugsweise 0,1 bis 5 Gew.-%, bezogen auf das Gesamtgewicht aller Bindemittelkomponenten, eingesetzt werden, können als einzelne Substanz oder, wegen häufiger vorteilhafter synergistischer Effekte, auch in Kombination miteinander verwendet werden.

Die Vorteile der Reaktivverdünner in ungesättigten Polyester- und ungesättigten Acrylatharzbindungsmitteln liegt unabhängig von der Härtungsart im Ersatz von toxikologisch bederklichen Reakionspartnern wie Styrol und niedermolekularen (Meth)acrylsäureestern und (Meth)acrylsäureethern, bzw. im Ersatz von physiologisch bedenklichen Lösungsmitteln in lösungsmittelhaltigen Lacken, beispielsweise solchen auf Basis von Alkydharzen.

Zweikomponenten-Polyurethanlacke, in denen die erfindungsgemäß zu verwendenden Reaktivverdünner eingesetzt werden können, sind insbesondere solche auf Basis von Hydroxylgruppen aufweisenden Harzen, insbesondere Hydroxylgruppen aufweisenden Polyester- und/oder Polyacrylatharzen und den üblichen Lackpolyisocyanaten. Während der Einbau der erfindungsgemäß zu verwendenden Octadienylether in die Systeme auf Basis der olefinisch ungesättigten Polyester und Polyacrylate im Sinne einer Copolymerisationsreaktion erfolgt, wird der Einbau der Reaktivverdünner in derartige Zweikomponenten-Polyurethanlacke, insbesondere über die in solchen Fällen vorzugsweise vorliegenden Hydroxylgruppen sichergestellt, wobei

allerdings die olefinischen Doppelbindungen der Reaktivverdünner im Sinne einer "double-cure-Reaktion" an der Vernetzungsreaktion teilhaben können, insbesondere wenn durch Mitverwendung von Peroxiden oder von Sikkativen (zusätzliche Trocknung durch den Einfluß von Luftsauerstoff) eine Polymerisationsreaktion der olefinisch ungesättigten Doppelbindungen zusätzlich zu der Isocyanat-Polyadditionsreaktion initiiert wird. Für den Einsatz in Zweikomponenten-Polyurethanlacken eignen sich insbesondere solche erfindungsgemäß zu verwendenden Reaktivverdünner, die eingebaute, langkettige aliphatische Monocarbonsäuren enthalten, wodurch den resultierenden Lacküberzügen ausgezeichnete hydrophobe Eigenschaften vermittelt werden.

Bezüglich der an sich bekannten Chemie der Zweikomponenten-Polyurethanlacke, die erfindungsgemäß durch die Mitverwendung der Reaktivverdünner modifiziert werden können, sei beispielsweise auf US-PS 3 124 605, 3 358 010, 3 903 126, 3 903 127, 3 976 622, 3 183 112, 3 394 111, 3 645 979, 3 919 218, GB-PS 1 060 430, 1 234 972, 1 506 373 und 1 458 564 verwiesen.

Zweikomponenten-Polyurethanlacke im Sinne der vorliegenden Erfindung sind jedoch auch Gemische aus erfindungsgemäß zu verwendenden Reaktivverdünnern mit Lackpolyisocyanaten der in den Zweikomponenten-Polyurethanlacken des Standes der Technik üblicherweise eingesetzten Art ohne Mitverwendung der an sich üblichen Hydroxylgruppen aufweisenden Lackharze. In solchen Zweikomponenten-Polyurethanlacken bestehen die Bindemittel lediglich aus den Reaktivverdünnern und den Polyisocyanaten.

Die Polyisocyanatkomponente besteht in allen diesen Zweikomponenten-Systemen im allgemeinenaus den üblichen, Biuretgruppen, Isocyanurat- oder Uretdiongruppen oder Urethangruppen aufweisenden Lackpolyisocyanaten auf Basis von einfachen Diisocyanaten wie Hexamethylendiisocyanat, Isophorondiisocyanat oder auch 2,4- und /oder 2,6-Diisocyanatotoluol, wobei die entsprechenden Lackpolyisocyanate mit aliphatisch gebundenen Isocyanatgruppen bevorzugt sind.

Epoxidharze, die unter Mitverwendung der erfindungsgemäß zu verwendenden Reaktivverdünner eingesetzt werden können sind die üblichen, mit Hydroxyl-, Carboxyl- und insbesondere Aminogruppen unter Addition reagierende Epoxidharze, wie sie beispielsweise in H. Wagner, H.F. Sarx "Lackkunstharze", Carl Hanser Verlag, München, 5. Auflage (1971), S. 174 ff., in "Methoden der organischen Chemie", Houben-Weyl, 4. Auflage, Georg Thieme Verlag, Stuttgart - New York (1987), Band 3, Makromolekulare Stoffe, S. 1891 ff. und der daraus hergestellten Lacke in Ullmanns Enzyklopädie der technischen Chemie, Verlag Chemie Weinheim (1978), 4. Auflage, Band 15, S. 637 ff., beschrieben sind. Für die Verwendung als Reaktivverdünner für Epoxidharze als wesentliche Bindermittelkomponente enthaltende Systeme eignen sich insbesondere Octadienylether mit einem Gehalt an Carboxylgruppen von 0,1 bis 30 Gew.-% und einem Gehalt an Hydroxylgruppen von 0 bis 20 Gew.-%. Bei der Aushärtung derartiger Systeme nehmen die Reaktivverdünner über diese Reaktivgruppen an der Vernetzungsreaktion teil, wobei auch hier eine weitere Vernetzung im Sinne einer "double-cure-Reaktion" denkbar ist.

Aminoplastharze, die mit erfindungsgemäß zu verwendenden Reaktivverdünnern kombiniert werden können, sind insbesondere mit Hydroxyl- und Carboxylgruppen aufweisenden Verbindungen zu Kondensationsreaktionen befähigte Aminoplastharze, wie Melamin-, Harnstoff- und/oder Guanamin-Formaldehyd-Kondensationsprodukte, beschrieben in der französischen Patentschrift FR-PS 943 411, in D.H. Solomon, "The Chemistry of Organic Filmformers", John Wiley & Sons, Inc. New York (1974), S. 235 - 240, in "Methoden der organischen Chemie", Houben-Weyl, 4. Auflage, Georg Thieme Verlag, Stuttgart - New York (1987), Band 3, Makromolekulare Stoffe, S. 1811 ff. und in H. Wagner und H.F. Sarx "Lackkunstharze", Carl Hanser Verlag, München, 5. Auflage (1971), S. 61 ff., und der daraus hergestellten Lacke in Ullmanns Enzyklopädie der technischen Chemie, Verlag Chemie Weinheim (1978), 4. Auflage, Band 15, S. 643 ff. Die für diese Verwendung bevorzugten erfindungsgemäßen Reaktivverdünner weisen einen Gehalt an Hydroxylgruppen von 0 bis 35 und an Carboxylgruppen von 0,1 bis 20 Gew.-% auf. Auch hier erfolgt der Einbau der Reaktivverdünner über die aus der Aminoplastchemie an sich bekannte Kondensationsreaktion, wobei auch hier eine zusätzliche Vernetzung im Sinne einer "double-cure-Reaktion" in Betracht kommt.

Phenolformaldehydharze, die mit den erfindungsgemäß zu verwendenden Reaktivverdünnern kombiniert werden können sind insbesondere mit Hydroxyl- und Carboxylgruppen zu Kondensationsreaktionen befähigte Phenol-Formaldehydharze wie z.B. Novolak- und/oder Resolharze, beschrieben in "Methoden der organischen Chemie", Houben-Weyl, 4. Auflage, Georg Thieme Verlag, Stuttgart - New York (1987) Band 3, Makromolekulare Stoffe, S. 1794 ff. und H. Wagner, H.F. Sarx "Lackkunstharze", Carl Hanser Verlag, München, 5. Auflage (1971), S. 45 ff., wobei hier die bereits oben im Zusammenhang mit den Aminoplastharzen gemachten Ausführungen bezüglich des Hydroxyl- und Carboxylgruppengehalts gelten. Auch hier ist im Prinzip ein "double-cure-Reaktionsmechanismus" denkbar.

Die erfindungsgemäß zu verwendenden Octadienylether ermöglichen auch im Falle der Verwendung in Bindemittel bzw. Bindemittelkombinationen, die keine radikalisch aushärtbaren olefinischen Doppelbindungen aufweisen, infolge ihrer oxidativen, zusätzlichen Vernetzung einer Erhöhung der Lösungsmittelresistenz

der resultierenden Beschichtungen. Im Falle der Verwendung in Aminoplast- bzw. Phenoplastharzen kann der Gehalt an abspaltbaren Formaldehyd reduziert werden, da geringe Vernetzermengen zur Herstellung hochwertiger Einbrennlackierungen benötigt werden. Im Falle der ebenfalls möglichen Kombination der erfindungsgemäß zu verwendenden Octadienylether mit blockierten Polyisocyanaten bzw. mit Lacken, die blockierte Polyisocyanate enthalten, kann deren Konzentration und damit die Menge an abzuspaltendem Verkappungsmittel bei gleicher Vernetzungsdichte ebenfalls reduziert werden.

Im allgemeinen werden die Bestandteile der erfindungsgemäßen Überzugs- und Beschichtungsmaterialien bei Temperaturen zwischen 5 und 150 °C gemischt und homogenisiert und dann gegebenenfalls noch weiteren Modifikationen unterworfen. In gewissen, allerdings nicht bevorzugten Fällen, ist es auch möglich, die erfindungsgemäß zu verwendenden Octadienylether in Gegenwart von anderen Bindemittelkomponenten herzustellen. So wäre beispielsweise die Veresterung der Octadienyletheralkohole mit Säuren oder Säureanhydriden der beispielhaft genannten Art in Gegenwart von solchen Bindemitteln denkbar, die im Sinne einer Esterbildungsreaktion inert sind.

Nach der Kombination der erfindungsgemäß zu verwendenden Reaktivverdünner mit den übrigen Bestandteilen der zum Einsatz gelangenden Bindemittel werden im allgemeinen lösungsmittelfrei einsetzbare Gemische erhalten, die zur Herstellung von Überzügen, Spachtelharzen, Abddichtmassen und Beschichtungsmaterialien in Kombination mit einer Vielzahl von Modifikatoren wie Pigmenten, Füllstoffen, Sikkativen, Verlaufsmitteln, Hautverhinderungsmitteln, Antischaummitteln, Härtungskatalysatoren, UV-Absorbern, Beschieunigern, Katalysatoren, Stabilisatoren gegen thermischen, photochemischen und oxidativen Abbau und organischen Lösungsmitteln bzw. Wasser verwendet werden können.

Es ist auch möglich, erfindungsgemäß zu verwendende Octadienylether als Reaktivverdünner enthaltende Systeme der genannten Art aus wässriger Emulsion zu verarbeiten, was beispielsweise mit Hilfe von Emulgatoren und gegebenenfalls üblicher in der Emulsionstechnik angewandter Hilfsmittel erfolgt.

Hierfür geeignete Emulgatoren sind bekannt und z.B. in Ullmanns Enzyklopädie der techn. Chemie, Band 10, 4. Auflage, S. 449 ff. beschrieben.

Die ionische Modifizierung der einzelenen Bindemittelkomponenten, insbesondere auch der erfindungsgemäß zu verwendenden Reaktivverdünner, beispielsweise durch Neutralisation zumindest eines Teils der oftmals vorliegenden Carboxylgruppen mit einer Base wie beispielsweise einem Alkalihydroxid, einem tertiären Amin oder Ammoniak stellt eine weitere Möglichkeit zur Herstellung von wässrigen Emulsionen dar.

Die der erfindungsgemäßen Reaktivverdünner enthaltenden Bindemittelkombinationen können zur Herstellung von Beschichtungsmitteln der unterschiedlichsten Art herangezogen werden. Erfindungsgemäße Reaktivverdünner enthaltende Beschichtungsmittel können beispielsweise zur Beschichtung von Holz, Kunststoffen, Leder, Textilien, Glas, Keramik oder Metallen dienen. Sie lassen sich mit den üblichen Applikationsmethoden wie Spritzen, Streichen, Fluten, Gießen, Tauchen, Walzen aufbringen.

Bei der Verwendung in Überzugsmitteln werden die Mengen so gewählt, daß im allgemeinen Trockenfilmdicken der Lackierungen je nach der Härtung von 0,005 bis 0,1 mm resultieren.

Die Applikationen von Spachteln- und Abddichtmassen auf Basis der erfindungsgemäßen Kombination erfordert Schichtdicken bis zu mehreren Millimetern, gegebenenfalls auch mehreren Zentimetern.

Die erfindungsgemäßen Überzugsmassen können je nach Art der Härtungsreaktion innerhalb des Temperaturbereichs von 0 bis 250 °C gehärtet werden. Lufttrocknende Lacke und solche, die Vernetzer mit freien Isocyanatgruppen enthalten, werden in der Regel bei Temperaturen von 0 bis 130 °C, vorzugsweise bei Raumtemperatur, ausgehärtet.

Einbrennlacke, die als Vernetzer beispielsweise verkappte Polyisocyanate oder Aminoplaste enthalten, benötigen im allgemeinen Härtungstemperaturen von 60 bis 250 °C. Dabei ist es manchmal vorteilhaft, die Härtung zunächst bei Temperaturen unter 120 °C zu beginnen und bei Temperaturen über 120 °C zu Ende zu führen. Auch der Einsatz von geeigneten Katalysatoren, wie beispielsweise den bereits angesprochenen Sikkativen ist nicht ausgeschlossen.

In den nachfolgenden Beispielen beziehen sich alle Prozentangaben auf das Gewicht.

## Beispiele

Die in den nachfolgenden Beispielen eingesetzten, in der Tabelle tabellarisch zusammengefaßten Reaktivverdünner wurden, soweit sie Estergruppen aufweisen, durch Schmelzkondensation bei 160 bis 200 °C unter Stickstoff aus den genannten Ausgangsmaterialien hergestellt.

Beispiele für Reaktivverdünner (Einwaage (g))

| Beispiel Nr. | 1 | 2 | 3 | 4 | 5 | 6 | 7 | 8 | 9 |
|---|---|---|---|---|---|---|---|---|---|
| Glycerinoctadienylether | - | 194,0[1)] | - | - | - | 100[1)] | - | 450[3)] | - |
| Trimethylolpropanocta-dienylether | 205,4[2)] | - | 75,3[2)] | 85,71[2)] | 85,5[2)] | - | 100[2)] | - | 100[4)] |
| Sojaölfettsäure | 154,5 | 166,7 | - | - | - | - | - | - | - |
| Cyclohexansäure | - | - | 28,73 | - | - | - | - | - | - |
| Phthalsäureanhydrid | - | - | - | 18,88 | - | - | - | 148 | - |
| Hexahydro-Phthalsäureanhydrid | - | - | - | - | 17,7 | - | - | - | |
| COOH/OH-Äquivalentverhältnis | 1:1 | 1:1 | 1:1 | 1:1 | 1:1 | - | - | 1:1,5 | |
| Kenndaten | | | | | | | | | |
| Carboxylgruppengehalt (%) ca. | 0,1 | 0,1 | 0,2 | 0,2 | 1,0 | - | - | 0,5 | - |
| Viskosität, [mPa·s/23°C] | 34 | 27 | 53 | 273 | 282 | 36 | 42 | 683 | - |
| Hydroxylgruppengehalt (%) ca. | 0,2 | 0,1 | 0,5 | 1,0 | 0,8 | 5,5 | 5,0 | 3,9 | - |

1) Hydroxylgruppengehalt: 5,5 %
2) Hydroxylgruppengehalt: 5,1 %
3) Hydroxylgruppengehalt: 11,4 %
4) Hydroxylgruppengehalt: 14,2 %

Verwendungsbeispiel I

a) Herstellung eines Alkydharzes als Prüfharz

8 174 g Sojaölfettsäure, 2 520 g Pentaerythrit und 3 222 g Phthalsäureanhydrid werden in einem mit Rührer, Destillationsbrücke, Heizung und Stickstoffeinleitungsrohr ausgerüsteten 15-1-Reaktionskessel eingewogen und unter Durchleiten von Stickstoff bei 230 ° C kondensiert, bis eine Säurezahl von 20,3 mg KOH/g erreicht ist.

b) Herstellen eines Klarlackes auf Alkydharz-/Reaktivverdünner-Basis

100 Gew.-Teile des Alkydharzes werden mit 66,67 Gew.-Teilen des Reaktivverdünners des Beispiels 3 kombiniert. Nach Zugabe von Sikkativen auf Metalloctoat-Basis (entsprechend 0,6 Gew.-Teilen Blei, 0,15

Gew.-Teilen Calcium und 0,04 Gew.-Teilen Kobalt) wurde die Harzmischung auf eine Glasplatte in einer Schichtstärke von 60 µm aufgezogen und bei Raumtemperatur getrocknet. Nach 8 Stunden war der Lackfilm klebfrei ausgehärtet.

Verwendungsbeispiel II

(Lack auf Basis eines Silikonharzes)

100 Gew.-Teile einer 50 %igen Lösung eines Methylsilikorharzes ®Baysilone-Harz M 120 = Handelsprodukt der Bayer AG mit einer Viskosität von 56 mPasec (23 °C) werden mit 50 Gew.-Teilen eines Reaktivverdünners auf Basis von Trimethylolpropanoctadienylether (Beispiel 7) versetzt und das Lösungsmittelgemisch aus Xylol und Butanol unter Anlegen von Vakuum bei Temperaturen unter 50 °C entfernt. Es resultiert eine Harzmischung, die ohne Verwendung von Lösungsmittel appliziert werden kann. Zum Harzgemisch wurde eine Trockenstoffkombination aus Metalloctoaten mit Metallgehalten von 0,6 Gew.-Teilen Blei, 0,15 Gew.-Teilen Calcium und 0,04 Gew.-Teilen Kobalt zugegeben. Nach dem Auftragen der Harzmischung in einer Schichtdicke von 20 µm wird nach 8 Stunden Trocknung bei Raumtemperatur ein klebfreier Lackfilm erhalten. Darüber hinaus wird eine Stabilisierung des Silikorharzes durch die Anwesenheit des Reaktivverdünners erreicht, die in der ursprünglichen lösemittelhaltigen Lieferform durch Butanol bewirkt wurde.

Verwendungsbeispiel III

(Beschichtungsmasse auf Basis eines Epoxidharzes)

Aus 100 Gew.-Teilen eines mittelviskosen, unmodifizierten Epoxidharzes mit einer Iodfarbzahl von 3, einer Viskosität von 11 300 mPasec (25 °C) und einem Epoxidäquivalentgewicht von ca. 190 auf Basis von Bisphenol A und Epichlorhydrin, 25 Gew.-Teilen eines Reaktivverdünners auf Basis des Veresterungsproduktes aus Trimethylolpropanoctadienylether und Cyclohexansäure (Beispiel 3) und 19 Gew.-Teilen eines aliphatischen Polyamins mit einer Iodfarbzahl von 35, einer Viskosität von 220 mPasec (20 °C) und einem NH-Äquivalentgewicht von 35, bestehend im wesentlichen aus Pentaethylenhexamin, wird eine dünnflüssige, gut verarbeitbare Beschichtungsmasse hergestellt, die nach kurzer Zeit aushärtet. Der Vorteil des Reaktivverdünners liegt in seiner niedrigen Viskosität und seiner Verträglichkeit mit dem Epoxidharz-/Amin-Härter-System. Wegen seiner oxidativen Trocknungseigenschaften härtet er in der Beschichtung selbst mit aus, ohne daß die Expoxid-Amin-Härtungsreaktion negativ beeinflußt wird. Ein zusätzlicher Harz- bzw. Härterbedarf ist nicht erforderlich.

Verwendungsbeispiel IV

(Beschichtungsmittel auf Basis eines ungesättigte Polyesterharzes)

a) Herstellung eines ungesättigten Polyesterharzes:
928 g Fumarsäure, 298 g Ethylenglykol, 274 g 1,2-Propandiol und 432 g Benzylalkohol werden unter Durchleiten von Stickstoff bei 180 °C unter Rühren in einem 3-1-Glaskolben verestert. Es wird ein ungesättigtes Polyesterharz mit einer Säurezahl von 29,3 mg KOH/g und einer Viskosität von 4 895 mPasec (23 °C) erhalten.

b) Erfindungsgemäße Verwendung:
100 Gew.-Teile des ungesättigten Polyesterharzes gemäß IV a), 100 Gew.-Teile des Reaktivverdünners gemäß Beispiel 8,2 Gew.-Teile einer Kobaltoctoatlösung in Toluol mit einem Metallgehalt von 2,2 % und 3 Gew.-Teile mit Methylethylketonperoxid werden bei Raumtemperatur gemischt.

Aus dieser Mischung wird ein Lackfilm in einer Schichtdicke von 90 µm auf einer Glasplatte aufgetragen und bei Raumtemperatur getrocknet. Nach 6,5 Stunden resultierte ein klebfreier Lackfilm mit kratzfester Oberfläche.

Verwendungsbeispiel V

(Wässriger Lack auf Basis eines ungesättigten Polyesterharzes)

200 Gew.-Teile des ungesättigten Polyesterharzes gemäß IV a), 20 Gew.-Teile des Reaktivverdünners gemäß Beispiel 8, sowie 10 Gew.-Teile eines Emulgatorharzes werden gemischt und portionsweise mit 50 Gew.-Teilen entionisiertem Wasser unter Zuhilfenahme eines Schnellrührers ((840 U/min) vermischt und über einen Zeitraum von 2 min homogenisiert. Es resultiert eine feinteilige, stabile wässrige Emulsion. Als Emulgator diente das Umsetzungsprodukt von 1,0 Mol Isophorondiisocyanat, 0,8 Mol Trimethylolpropandiallylether, 0,05 Mol Trimethylolpropan und 0,46 Mol Polyethylenglykol des Molekulargewichts 1 500. Der aus diesen Ausgangsmaterialien hergestellte Emulgator weist einen Ethylenoxidgehalt von 59,4 % und einen Gehalt an olefinischen Doppelbindungen (Molekulargewicht = 24), bezogen auf Feststoff, von 3,5 % auf.

10 Gew.-Teile der so hergestellten Emulsion werden mit 0,3 Gew.-Teilen einer 30 %igen $H_2O_2$-Lösung in Wasser und 0,2 Gew.-Teilen einer 21,8 %igen wässrigen Kobaltacetatlösung (5,15 % Kobalt) versetzt und in einer Schichtdicke von 90 µm auf eine Glasplatte aufgerakelt. Nach 7-stündiger Trocknung bei Raumtemperatur wird ein kratzfester, klebfreier Lackfilm erhalten.

Verwendungsbeispiel VI

(Lackfilm auf Basis eines Aminoplastharzes)

100 Gew.-Teile einer 60 %igen Lösung eines handelsüblichen Aminoplastharzes (®Plastobal EBS 400 der BASF AG, Lufwigshafen) in Isobutanol wurden mit 120 Gew.-Teilen des Reaktivverdünners gemäß Beispiel 6 gemischt und durch Anlegen von Vakuum bei erhöhter Temperatur (max. 40 °C) von Isobutanol befreit. Es resultiert eine 60 %ige Lösung des Harzes im Reaktivverdünner einer Viskosität bei 23 °C von 1 740 mPasec, die nach acht Wochen Lagerung bei Raumtemperatur unter Ausschluß von Luftsauerstoff keine Veränderung der Viskosität erkennen ließ.

Nach Zusatz von 2 Gew.-Teilen p-Toluolsulfonsäure und 1 Gew.-Teil einer Trockenstoffkombination aus Metalloctoaten mit Metallgehalten von 0,6 Gew.-Teilen Blei, 0,15 Gew.-Teilen Calcium und 0,04 Gew.-Teilen Kobalt wurde das Gemisch auf einer Glasplatte zu einem Lackfilm mit einer Schichtdicke von 60 µm aufgeraktelt. Nach 6 Stunden war die Filmoberfläche klebfrei und belastbar. Als vorteilhaft erweist sich der Verzicht auf Alkohole als Lösungsmittel und Stabilisatoren für das Amino-Formaldehydharz und die zusätzliche oxidative Trocknung des Reaktivverdünner-Aminoharz-Lacksytems, die zu einer Reduzierung der Formaldehyd-Emission bei der Härtung beiträgt.

Verwendungsbeispiel VII

(Lack auf Basis eines Phenolharzes)

In ®Phenodur PR 612 der Hoechst AG (80 %ige Lösung eines Phenolharzes in Butanol) wurde Butanol durch die gleiche Menge des Reaktivverdünners gemäß Beispiel 4 ersetzt. 100 Gew.-Teile dieser Kombination wurden dann mit 50 Gew.-Teilen ®Beckopox EP 307, einem Epoxidharz der Hoechst AG versetzt, in einer Schichtdicke von 30 µm auf eine Glasplatte aufgetragen und über einen Zeitraum von 30 min. bei 180 °C ausgehärtet. Es resultierte ein harter und elastischer Lackfilm von guter Oberflächenqualität.

Verwendungsbeispiel VIII

(Zweikomponenten-Polyurethanlack)

a) Herstellung eines Hydroxylgruppen aufweisenden Polyacrylatharzes:
In einem mit Rührer, Rückflußkühler, Kühl- und Heizvorrichtung versehenen Autoklaven werden unter Durchleiten des halben Kesselvolumens Stickstoff/Stunde 4 348 g Xylol und 2 g Zinndioctoat eingewogen und unter Rühren auf 175 °C bei geschlossener Apparatur aufgeheizt. Dann werden aus einem Vorlagebehälter, der eine Mischung aus 3 848 g ε-Caprolacton, 4 352 g Hydroxyethylacrylat, 3 298 g Styrol, 2 854 g Butylacrylat, 112 g Polybutadien (Polybutadien = ®Nisso G-1000 (Handelsprodukt der Fa. Nippon Soda Co. mit 10 % cis-/trans-Doppelbindungen und 90 % 1,2-Vinyldoppelbindungen im Polybutadien; Mn = 1 350 g/Mol), 110 g Acrylsäure und 170 g n-Dodecylmercaptan enthält, dieses Gemisch über eine Dosiervorrichtung innerhalb von vier Stunden in den Autoklaven eindosiert und dabei

die Temperatur von 175 °C konstant gehalten. Parallel dazu erfolgt die Dosierung von 454 g Di-tert.-butylperoxid in 452 g Xylol aus einem zweiten Vorlagebehälter innerhalb von 5 Stunden. Nach dem Ende der Peroxidzugabe wird der Autoklaveninhalt noch 2 Stunden bei 175 °C gerührt. Nach dem Abkühlen des Kesselinhaltes resultiert eine Harzmischung mit einem Feststoffgehalt von 75,4 %, einer Viskosität von 3 975 mPa•s bei 23 °C, einer Säurezahl von 6,6 mg KOH/gm einer Hydroxylzahl von 104 mg KOH/g und einer Hazen-Farbzahl von 35 APHA.

b) Lackfilm auf Polyacrylatharz/Reaktivverdünner-Polyisocyanat-Basis

317 g des hydroxyfunktionellen Polyacrylatharzes werden mit 102 g Reaktivverdünner (Beispiel 9) versetzt und unter Vakuum vom Lösungsmittel Xylol bei 60 °C unter Schutzgasatmosphäre befreit.

Es resultiert eine 100 %ige klare, farblose Harzmischung mit einer Säurezahl von 5,2 mg KOH/g und einer Hydroxylzahl von 226 mg KOH/g.

Zu 5,61 Teilen dieser Harzmischung werden 4,39 Teile des Trimerisats von Hexamethylendiisocyanats ®Desmodur N 3300 (Handelsprodukt der Bayer AG) gegeben, so daß pro OH-Gruppe eine NCO-Gruppe für die Vernetzung zur Verfügung steht. Nach Zusatz von 0,02 Teilen Dibutylzinnoxid wird ein 30 µm-starker Lackfilm auf einer Glasplatte aufgerakelt und bei Raumtemperatur getrocknet, Nach 6 Stunden wird ein klebfreier Lackfilm mit belastbarer Filmoberfläche erhalten.

Der Vorteil des eingesetzten Reaktivverdünners liegt in der Herstellung vollständig lösemittelfreier PUR-Lacke auf Polyacrylatharzbasis, die zu lichtechten und chemikalienbeständigen Lackfilmen ausgehärtet werden können, wobei der Reaktivverdünner sowohl über seine freien Hydroxylgruppen (OH-NCO-Reaktion) in den Lackfilm eingebaut werden kann und zusätzlich eine oxidative Vernetzung über die Octadienylethergruppierung bewirkt wird, die die Vernetzungsdichte erhöht und damit die Beständigkeitseigenschaften verbessert. Gleichzeitig verleiht die Octadienylethergruppierung dem PUR-Lack hydrophobe Eigenschaften, wodurch der negative Einfluß von Luftfeuchtigkeit auf die Lackfilmeigenschaften während des Trocknungsvorgangs (Blasenbildung) vermindert wird.

Verwendungsbeispiel IX

(Zweikomponenten-Polyurethanlack)

a) Herstellung eines Hydroxylgruppen aufweisenden Polyesterharzes

In einem mit Rückflußkühler, Rührer, Heiz- und Kühlvorrichtung versehenen Reaktionskessel werden unter Durchleiten des halben Kesselvolumens Stickstoff pro Stunde 1 402 g Hexandiol-1,6, 1 590 g Trimethylolpropan, 2 564 g Cyclohexandimethanol, 1 857 g Neopentylglykol, 3 816 g Adipinsäure und 2 096 g Maleinsäureanhydrid eingewogen und nach dem Aufheizen auf 180 °C unter Austreiben des Reaktionswassers so lange polykondensiert, bis ein Harz einer Säurezahl von 1,9 mg KOH/g, einer Hydroxylzahl von 159 mg KOH/g, einer Hazen-Farbzahl von 35 APHA und einer Viskosität der 80 %igen Lösung in Butylacetat von 2 912 mPasec bei 23 °C resuliert.

b) Lackfilm auf Polyesterharz/Reaktivverdünner/Polyisocyanatbasis

270 g des hydroxyfunktionellen Polyesterharzes werden mit 115 g Reaktivverdünner (Beispiel 9) versetzt und unter Vakuum vom Lösungsmittel Butylacetat bei 60 °C unter Schutzgasatmosphäre befreit.

Es resultiert eine lösemittelfreie, klare, farblose Harzmischung mit einer Säurezahl von 0,4 mg KOH/g, einer Hydroxylzahl von 244 mg KOH/g und einer Viskosität von 20 300 mPasec bei 23 °C.

Zu 5,42 g Teilen dieser Harzmischung werden 4,39 Teile des Trimerisates von Hexamethylendiisocyanats ®Desmodur N 3300 (Handelsprodukt der Bayer AG) im stöchiometrischen Verhältnis der OH- zu den NCO-Gruppen gegeben. Nach Zusatz von 0,02 Teilen Dibutylzinnoxid wird ein Lackfilm mit einer Schichtdicke von 60 µm auf einer Glasplatte aufgerakelt und bei Raumtemperatur getrocknet.

Nach 7,5 Stunden wird ein klebfreier Lackfilm mit belastbarer Filmoberfläche erhalten. Die Vorteile des erfindungsgemäßen Gemisches sind identisch mit denen des vorher beschriebenen Verwendungsbeispieles.

Verwendungsbeispiel X

(Lack auf Basis eines ungesättigten Polyacrylatharzes)

a) Herstellung eines ungesättigten Polyacrylazharzes

In einem mit Rührer, Rückflußkühler, Wasserabscheider, Heiz- und Kühlvorrichtung versehenen Reaktionsgefäß werden 219,3 g Adipinsäure, 166 g Terephthalsäure, 382,5 g pro OH-Gruppe 3,9-fach ethoxyliertes Trimethylolpropan und 186,3 g Ethylenglykol eingewogen und unter Durchleiten von einem

halben Kesselvolumen Stickstoff pro Stunde bei 230 °C polykondensiert, bis die Säurezahl 3 mg KOH/g erreicht hat.

Dann werden 451,3 g Toluol, 252,0 g Acrylsäure, 15,8 g p-Toluolsulfonsäure, 2,1 g p-Methoxyphenol, 2,1 g 2,6-Di-tert.-butylmethylphenol und 1,05 g Trichlorethylphosphit bei 40 °C zugesetzt und das Reaktionsgemisch bei 120 °C unter azeotroper Fahrweise unter Durchleiten von Luft bis zu einer Säurezahl von 15,6 mg KOH/g polykondensiert. Nach dem Abdestillieren des Toluols resultiert ein ungesättigtes Acrylatharz mit einer Viskosität von 8 800 mPasec bei 23 °C.

b) Lackfilm auf Basis des ungesättigten Polyesteracrylatharzes und Reaktivverdünner

66,67 Teile des vorher beschriebenen Polyesteracrylates und 33,33 Teile des Glycerin-bis-octadienylethers (Beispiel 6) werden zusammen bei 40 °C ge mischt. Es resultiert eine Harzmischung mit einer Viskosität von 640 mPasec bei 23 °C, einer Säurezahl von 9,6 mg KOH/g und einer Hydroxylzahl von 89 mg KOH/g.

Zu 100 Teilen dieser Mischung werden 2 Gew.-Teile einer Toluollösung von Kobaltoctoat mit einem Metallgehalt von 2,2 Gew.-Teilen und 3 Gew.-Teilen Methylethylketonperoxid gegeben. Dieses Gemisch wird in einer Schichtdicke von 90 µm auf einer Glasplatte aufgezogen und bei Raumtemperatur getrocknet. Nach 9 Stunden resultiert ein kratzfester Lackfilm mit belastbarer Filmoberfläche.

## Patentansprüche

1. Die Verwendung von gegebenenfalls Estergruppen aufweisenden Octadienylethern einer Viskosität bei 23 °C von max. 5000 mPa•s mit einem Gehalt an Octadienylgruppen $-C_8H_{13}$ von 1 bis 80 Gew.-%, an Hydroxylgruppen von 0 bis 35 Gew.-% und an Carboxylgruppen von 0 bis 30 Gew.-% als Reaktivverdünner für Überzugsmittel, sowie Spachtel- und Abdichtmassen.

2. Verwendung gemäß Anspruch 1, dadurch gekennzeichnet, daß man als Octadienylether
   a) Octadienylether von mehrwertigen Alkoholen des Molekulargewichtsbereichs 62 bis 400 oder
   b) Veresterungsprodukte der unter a) genannten Octadienylether, die durch Umsetzung der unter a) genannten Octadienylether mit unterschüssigen Mengen an, gegebenenfalls olefinisch ungesättigten, ein- oder mehrbasischen Säuren des Molekulargewichtsbereichs 60 bis 600 oder an Anhydriden derartiger Säuren erhalten worden sind,

   verwendet.

3. Verwendung gemäß Anspruch 1 und 2, dadurch gekennzeichnet, daß man die Octadienylether in Mengen von 1 bis >100 Gew.-%, bezogen auf alle Bindemittelkomponenten, inklusive den Reaktivverdünnern, verwendet.

4. Verwendung gemäß Anspruch 1 bis 3 in Lacken, Beschichtungs- oder Dichtmassen auf Basis von radikalisch härtbaren, olefinisch ungesättigten, gegebenenfalls urethanmodifizierten Polyesterharzen.

5. Verwendung gemäß Anspruch 1 bis 3 in Lacken auf Basis von oxidativ härtbaren Alkydharzen.

6. Verwendung gemäß Anspruch 1 bis 3 in Zweikomponenten-Polyurethanlacken.

7. Verwendung gemäß Anspruch 1 bis 3 in Lacken, Beschichtungs- und Dichtmassen auf Basis von Epoxidharzen.

8. Verwendung gemäß Anspruch 1 bis 3 in Lacken auf Basis von Aminoplast- oder Phenoplastharzen.

9. Verwendung gemäß Anspruch 1 bis 3 in Lacken auf Basis von Silikonharzen.

Europäisches Patentamt

# EUROPÄISCHER RECHERCHENBERICHT

Nummer der Anmeldung

EP 92 12 0433

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 819 720 (J. M. KLIEGMAN)<br>* Spalte 2, Zeile 57 - Spalte 3, Zeile 22; Beispiel 5 *<br>--- | 1-9 | C09D7/00<br>C09D5/34 |
| A | CHEMICAL ABSTRACTS, vol. 86, no. 20, 16. Mai 1977, Columbus, Ohio, US;<br>abstract no. 141793,<br>Seite 98 ;Spalte 2 ;<br>* Zusammenfassung *<br>& JP-A-51 040 053 (MITSUBISHI)<br>--- | 1-5,7 | |
| A | CHEMICAL ABSTRACTS, vol. 79, no. 24, 17. Dezember 1973, Columbus, Ohio, US;<br>abstract no. 137968,<br>Seite 34 ;Spalte 1 ;<br>* Zusammenfassung *<br>& JP-A-47 045 838 (MITSUBISHI)<br>--- | 1-5,7 | |
| A | CHEMICAL ABSTRACTS, vol. 80, no. 20, 20. Mai 1974, Columbus, Ohio, US;<br>abstract no. 109251,<br>Seite 28 ;<br>* Zusammenfassung *<br>& JP-A-47 045 599 (MITSUBISHI)<br>--- | 1-5,7 | RECHERCHIERTE SACHGEBIETE (Int. Cl.5)<br>C09D |
| A | CHEMICAL ABSTRACTS, vol. 87, no. 13, 26. September 1977, Columbus, Ohio, US;<br>abstract no. 97385,<br>Seite 217 ;<br>* Zusammenfassung *<br>& JP-A-51 142 532 (KUREHA)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 23 MAERZ 1993 | KLIER E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)